# EUROPEAN PATENT SPECIFICATION

(11) **EP 2 501 001 B1**
(45) Date of publication and mention of the grant of the patent: **03.05.2017**
(21) Application number: 11158539.4
(22) Date of filing: 16.03.2011
(51) Int. Cl.: H02B 13/025

(54) **Electric switchgear panel with gas venting assembly**
Elektrische Schaltanlage mit Gasgkühlanordnung
Panneau d'appareillage de commutation électrique doté d'un système de ventilation des gaz

(43) Date of publication of application: 19.09.2012
(73) Proprietor: ABB Schweiz AG, 5400 Baden (CH)
(72) Inventor: Franco, Walter-Salvatore, 24100, Bergamo (IT)
(74) Representative: De Santis, Giovanni

(56) References cited:
- WO-A1-2008/136113
- DE-A1- 4 141 685
- DE-A1- 19 817 526
- DE-U1- 29 509 361

## Description

The present invention relates to an electric switchgear panel with a gas venting assembly.

As known, in electrical energy distribution systems switchgear panels are electrical components used as node points, while cables and overhead lines represent the conjunction of the various nodes.

From a structural point of view, known switchgear panels, which can be also indicated with the equivalent terms of electric switchboards, or simply switchgear or electric panels, or similar definitions, usually comprise a metallic enclosure that is internally divided into several compartments or cells housing various apparatuses and equipment. For example, one compartment houses a switching unit, such as a circuit breaker; a second compartment houses main cables, such as bus-bars, feeding power from an electrical source; a further compartment houses a system of cables suitable to be connected to a load, for example an electrical motor. Depending on the applications, switchgear panels may comprise other components, such as current transformers, fuses, voltage transformers, et cetera.

During the working life of a switchgear panel, it is possible that some electrical faults or malfunctioning occur, such as short circuits, current overloads, and in particular arcing events.

Arcing events, e.g. arcing faults or flashes, occur when electric current arcs strike for instance between two conductors inside the switchgear cabinet, e.g. between phase conductors, phase and neutral conductors, between the contacts of the circuit breaker used, or between a conductor and ground, et cetera. When arcing faults occur, in particular in medium- to high-voltage power applications wherein levels of energy involved are quite significant, the ionized gas associated with them may be released at pressures and temperatures sufficient to severely damage or destroy the switchgear panel itself, and/or the devices and equipment housed inside, and they can be also potentially dangerous for operating personnel or equipment outside the enclosure. In particular, the materials involved in or exposed to the arc produce hot decomposition products, both gaseous and particulate either plastic and/or metallic, which may be discharged to the outside of the enclosure together with or in addition to hot gases and flames.

Due to these problems, sever safety standards and related tests have been introduced; for instance, one typical standard test foresees the use of highly flammable indicators, such as pieces of cotton or equivalent material, which are placed outside the switchgear enclosure around the perimeter of the enclosure at a certain distance from some or all of its lateral walls.

During the test when an internal arc is caused to strike, these flammable indicators must not ignite.

Hence, such standards have imposed onto switchgear manufactures the adoption of protection systems suitable to prevent and/or mitigate the effect of possible electric arcs.

In particular, many known solutions are focused on an early detection of an occurring electric arc with a consequent fast intervention devoted to prevent or mitigate its undesired effects at an early stage.

For example, a first solution foresees the evaluation of current perturbations in a conductor which are indicative of an arcing event; a second solution uses pressure sensors to monitor the increase in pressure indicative of an arcing event. A further solution involves the use of optical detectors, such as optical fibres, to detect visible light and thereby to sense the arc flash associated with an arcing event.

Other solutions are instead focused on limiting the resulting effects of an electric arc.

For example, there are widely used arc-resistant switchgear cabinets able to mechanically withstand the pressure waves and temperatures of the hot gases associated with an arcing fault; in some other cases there are provided specific parts of the enclosure which may blow up due to an electric arc occurring inside the enclosure.

In addition or in alternative, there are provided also suitable paths for channelling and venting the hot gases and flames generated by an arcing fault out from the internal compartments towards a desired area; for example, there are provided flaps or ducts which lead the hot gases, flames and particulate to the outside environment through the ceiling of the enclosure or in some cases even underground, i.e. towards zones far away from possible presence of operating personnel.

Patent document DE19817526 discloses a gas venting assembly according to the preamble of claim 1.

Patent document DE4141685 discloses a venting assembly comprising two or more perforated plates at least one of which is corrugated or clinched.

Patent document DE29509361 discloses a venting assembly having one top plate which is perforated so as to allow venting outside from the top part of a switchgear cabinet. Although known solutions perform in a quite satisfying way, there is still need and desire for further improvements.

This desire is fulfilled by a switchgear panel according to the present invention which comprises an enclosure having a plurality of walls which delimit an internal volume suitable to accommodate electrical or electronic equipment, at least a first wall of said plurality of walls being provided with one or more openings, and a gas venting assembly which is operatively associated to said first wall and comprises:
- at least a first barrier element comprising a first surface which is provided with a plurality of first through openings defining each a first venting area;
- a second barrier element comprising a second surface provided with a plurality of second through openings defining each a second venting area.

The switchgear panel is characterized in that said gas venting assembly further comprises a third barrier element comprising a third shielding surface, wherein said first barrier element, said second barrier element and said third barrier element are operatively coupled to each other and to said first wall so as to define one or more side venting areas which are located transversely with respect to said plurality of first through openings and/or said plurality of second through openings, wherein said first barrier element, said second barrier element and said third barrier element are mutually assembled outside said enclosure in a vertically stacked configuration by means of connectors, said first barrier element being positioned with said first surface facing said first wall, said second barrier element being positioned with said second surface spaced apart from and facing said first surface, and said third barrier element being positioned with said third shielding surface spaced apart from and facing said second surface, wherein said one or more side venting areas are defined between and at the borders of said second barrier element and said third barrier element, and wherein said first barrier element and said second barrier element delimit between them an internal space which is substantially closed at the sides.

Further characteristics and advantages of the invention will emerge from the description of preferred, but not exclusive embodiments of the switchgear panel according to the invention, non-limiting examples of which are provided in the attached drawings, wherein:
figure 1 is a perspective view showing an electric switchgear panel provided with a gas venting assembly according to the invention;
figure 2 is a perspective view of a first barrier element of the gas venting assembly of figure 1 with a portion magnified in order to better illustrate the structure of the first barrier element;
figure 3 is a perspective view of a second barrier element of the gas venting assembly of figure 1 with a portion magnified in order to better illustrate the structure of the second barrier element;
figure 4 is a perspective view of a third shielding element of the gas venting assembly of figure 1;
figure 5 is a perspective view of a shaped side element of the gas venting assembly of figure 1;
figure 6 in an exploded view illustrating the elements of the gas venting assembly of figure 1 during assembling;
figure 7 shows a side view of the gas venting assembly of figure 1 when assembled.

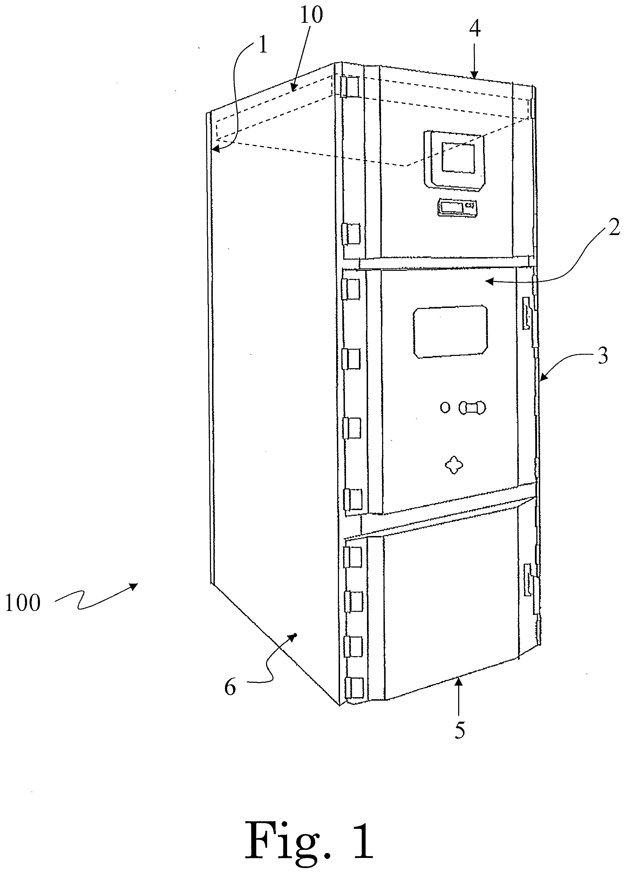

Figure 1 shows an example of an electric switchgear panel according to the invention, indicated by the overall numeral reference 100 which comprises, according to known solutions, an enclosure having a plurality of walls, namely a rear wall 1, a front wall 2 (e.g. a single or multi-part door), two lateral walls 3, 6, a top wall or roof 4 and a bottom wall 5, which all together define an internal volume suitable to accommodate various electrical or electronic equipment and/or devices, such as for example, a circuit breaker, bus-bars, cables, electronic relays et cetera.

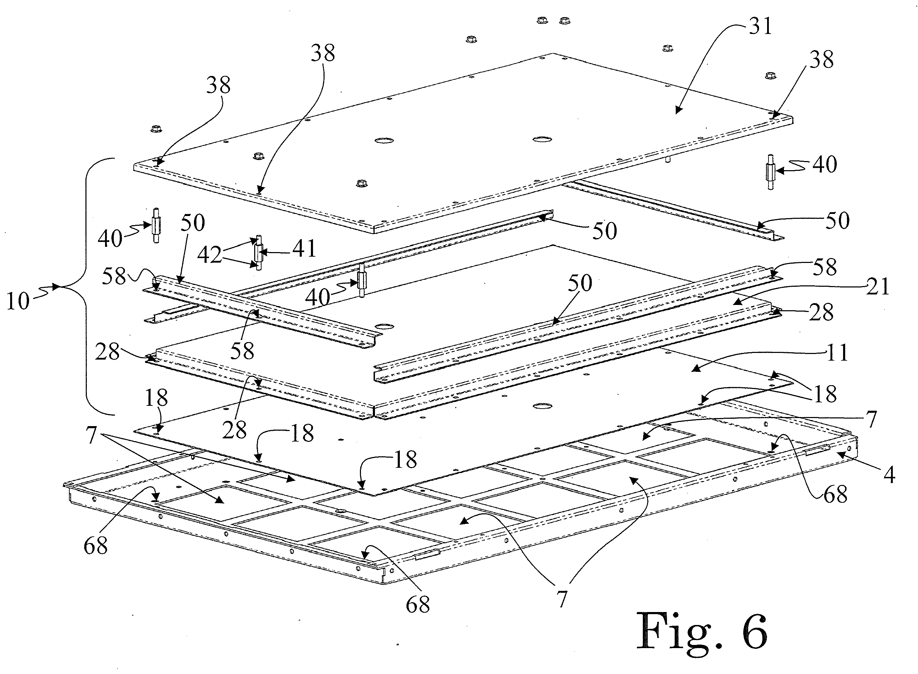

At least one of the walls of the enclosure, in the embodiment illustrated preferably the top wall or roof 4 (hereinafter referred to as the "first wall"), is provided with one or more openings 7, as illustrated schematically in figure 6; such openings 7 are suitable to allow venting outside the enclosure the hot gases, flames, particulate, and the like, which may be generated when an electric arc strikes inside the panel 100.

Advantageously, the switchgear panel 100 according to the present invention comprises a gas venting assembly which is globally indicated by the reference number 10 and is operatively associated to the enclosure of the panel 100.

In the exemplary embodiment illustrated, the gas venting assembly 10 is positioned outside the enclosure and is operatively associated to the first wall 4 and - as it will result more clearly from the following description- it is devised to mitigate the effects resulting from any electric arc striking inside the enclosure, e.g. flames, particulates, and in particular hot gases.

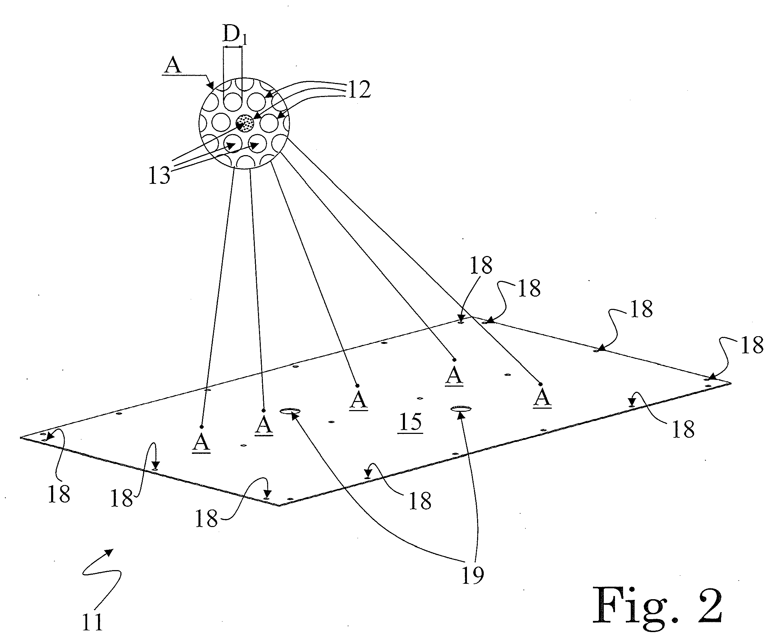

The gas venting assembly 10 comprises at least a first barrier element 11 which, as illustrated in the exemplary embodiment of figure 2, comprises a flat surface 15 which is provided with a plurality of through openings 12.

Clearly, the first barrier element 11 may be differently shaped with respect to the exemplary form illustrated in the attached figure, provided such different shape is suitable for the application.

For the sake of simplicity and better illustration, in figure 2 a portion (A) of the flat surface 15 has been magnified; it has to be understood that the magnified portion (A) with the through openings 12 extends over a significant part of the flat surface 15; for instance, at least 30% of the entire flat surface 15, preferably at least 40% of the entire flat surface 15, more preferably at least a predominant (i.e. more than 50%) part of the entire flat surface 15, is perforated with through openings 12.

The perimetric rims of each first opening 12 delimit a through area 13, i.e. a venting area 13 through which the hot gases, flames, particulates, coming from the inside of the enclosure can pass through; the various venting areas 13 defined by each of the first openings 12 are preferably substantially (e.g. +/- 10%) equal to each other.

Preferably, the first through openings 12 which delimit all a respective substantially equal venting area 13 are randomly positioned on the flat surface 15.

In the exemplary embodiment illustrated in figure 2, the first through openings 12 are preferably constituted by circular through holes 12, with the front area of each circle forming the respective venting area 13 (an exemplary one of which is marked with dots in the magnified portion (A)).

Alternatively it is also possible to have first through openings of whatever shape provided it is compatible for the scope of the present invention, e.g. there can be squared through openings, or elliptic through openings, et cetera, preferably delimiting each the same respective venting area 13.

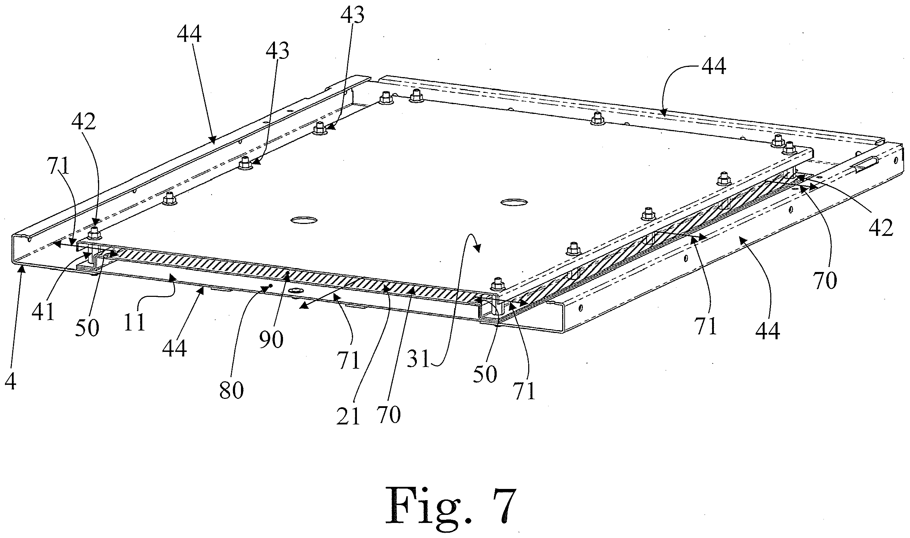

Further, in addition to the one or more first through openings 12 defining each a respective venting area 13, with all venting areas 13 being equal to each other, the barrier element 11 can be provided with other openings whose perimetric rims may delimit a different through area. For example, some connecting holes 18 are provided at the borders of the first barrier element 11 for purposively receiving connecting means, such as portions of connectors 40 illustrated in figures 6 and 7 which will be described in more details hereinafter; some others openings 19 may be instead provided for receiving other generic connection means or closing elements, such as plug-in small bushings, et cetera.

In any case, the number of first through openings 12 defining each a respective (substantially same) venting area 13 provided on the flat surface 15 is preferably predominant, i.e. at least more than half the holes\openings provided on the first surface 15 is constituted by the indicated first through openings 12.

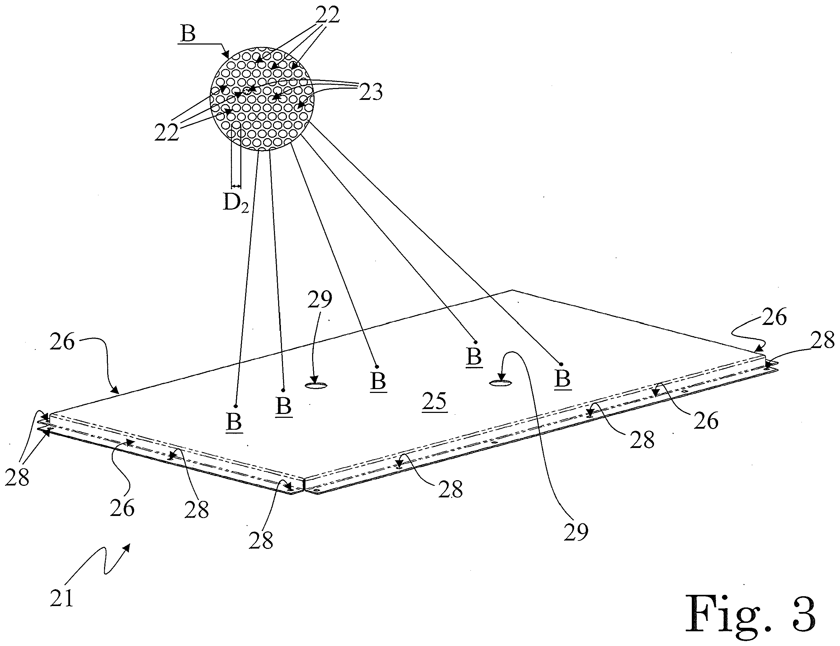

In the exemplary embodiment illustrated in the figures, the gas venting assembly 10 comprises a second barrier element 21 operatively associated to the first barrier element 11. In the example illustrated in figure 3, the second barrier element 21 is constituted by a metallic plate and has a central portion 25, substantially flat (hereinafter referred to as the "second flat surface 25") which is provided with a plurality of second through openings 22. In the exemplary embodiment illustrated side portions 26, having for instance an L-shaped cross-section, protrude from the second flat surface 25.

Also the second barrier element 21 may have a different shape, e.g. U- or C-shaped, or any other suitable shape provided it is compatible with the scope of the application.

For the sake of simplicity and better illustration, also in figure 3 a portion (B) of the second flat surface 25 has been magnified; it has to be understood that the magnified portion (B) with the through openings 22 extends over a significant part of the flat surface 25. For instance, at least 30% of the entire flat surface 25, preferably at least 40% of the entire flat surface 25, more preferably at least a predominant (i.e. more than 50%) part of the entire flat surface 25, is perforated with through openings 22.

The perimetric rims of each second opening 22 delimit a through area 23, i.e. a venting area 23 through which can pass the hot gases, flames, particulates, coming from the inside of the enclosure and having already passed the openings 7 and the first openings 12; the various venting areas 23 defined by each of the second openings 22 are substantially (e.g. +/-10%) equal to each other.

Preferably, also the one or more second through openings 22 which delimit all a respective substantially equal venting area 23 are randomly positioned on the second surface 25. Preferably, as illustrated in figure 3, also the second through openings 22 are constituted by circular through holes 22, with the front area of each circle forming the respective venting area 23 (an exemplary one of which is marked with dots in the magnified portion (B)). Alternatively, it is also possible to have on the second barrier element 21 through openings of whatever shape as also indicated above for the first barrier element 21, e.g. squared, elliptic, et cetera, delimiting each a respective same area 23, and provided they are compatible for the scope of the present invention.

Also the second barrier element 21 may be provided with openings additional to the second through openings 22 and whose perimetric rims may delimit a different through area; in particular, some openings 29 may be used just for receiving fixing screws or closing elements, while some connecting holes 28 are provided purposively for example at the borders of the second barrier element 21. Such additional connecting holes 28 are suitable to be aligned with the connecting holes 18 provided on the first barrier element 11 and to receive portions of connectors 40 as will be described in more details hereinafter.

In any case, the number of second through openings 22 defining each a respective same venting area 23 provided on the second surface 25 is preferably predominant, i.e. at least more than half the holes/openings provided on the second surface 25 is constituted by the indicated second through openings 22.

Preferably, the first venting area 13 delimited by the rims of each first through opening 12 of the set of one or more first through openings 12 is different from the second venting area 23 delimited by the rims of each second through opening 22 of the set of one or more second through openings 22.

According to a particularly preferred embodiment, the first venting area 13 defined by each first through opening 12 of the set of one or more first through openings 12 is larger than the second venting area 23 of each second through opening 22 of the set of one or more second through openings 22.

In particular, the second venting area 23 of each second through opening 22 of the set of second through openings 22 is for example between 2% and 90%, preferably between 3% and 50% of the first venting area 13 defined by each first through opening 12 of the set of first through openings 12.

For instance, in the example illustrated, each circular first opening 12 has a diameter D₁ of 6mm while each circular second opening 22 has a diameter D₂ of 2 mm; hence, each first venting area 13 is equal to 28,26 mm², while each second venting area 23 is equal to 12,56 mm².

The gas venting assembly 10 is provided with a third barrier or shield element 31 which is operatively associated to at least one of the first and second barrier elements 11, 12.

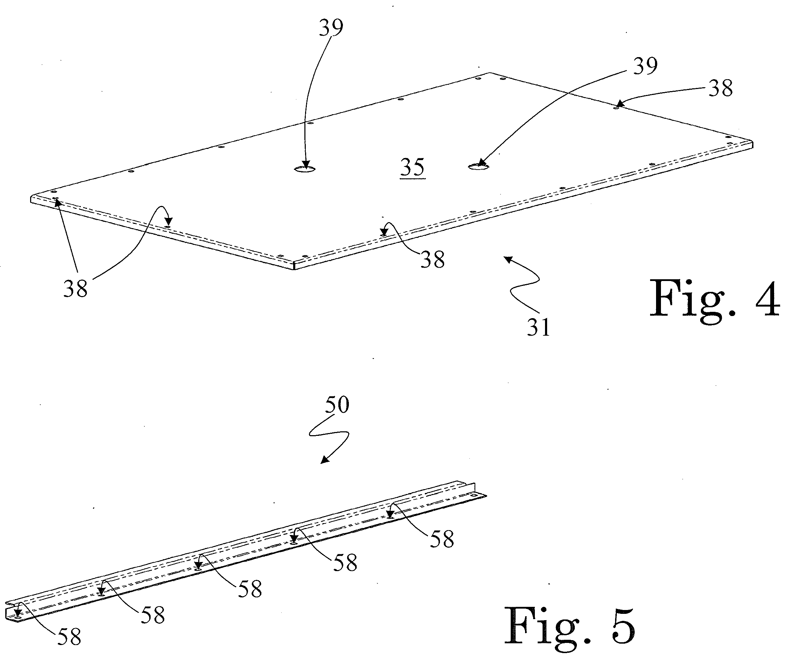

In the exemplary embodiment illustrated in figure 4, the third barrier element 31 is constituted by a metallic plate having for example a U-shaped cross section wherein the largest part has a central flat portion 35 which is substantially not perforated (apart from possible openings 39 needed for receiving some closing elements); in addition at the borders of the central flat portion 35 there are provided connecting holes 38 used to be aligned with the holes 18 provided on the first barrier element 11 and the holes 28 provided on the second barrier element 21 and to receive connectors 40 as will be described in more details hereinafter. In particular, the non-perforated portion of the flat surface 35 constitutes the predominant part, for instance at least 50% of the entire flat surface 35, preferably at least 60% of the entire flat surface 35, more preferably at least 70% part of the entire flat surface 35.

Clearly, also the third barrier element 31 may have a different shape provided it is suitable for the scope of application.

In any case, the third barrier 31 is conceived as a shield, i.e. as a substantially closed element which prevents as much as possible gases, flames and particulates, to exit from the top part of the assembly 10, i.e. in a direction substantially perpendicular to the roof 4.

In the exemplary embodiment illustrated, the gas venting assembly 10 comprises also one or more side or frame members 50; as illustrated in figure 5, each frame members 50 may be constituted by a shaped metallic element having for instance an S-shaped cross-section. On one or more portions of each frame member 50 there are provided connecting holes 58 suitable to be aligned with the holes 18, 28, 38 provided on the first barrier element 11, the second barrier element 21, and the shield element 31, respectively, and to receive portions of connectors 40 as will be described in more details hereinafter.

Clearly, also such frame members 50 when used can have any other suitable shape, e.g. L-shaped, C-shaped, et cetera.

According to the exemplary embodiment illustrated and as shown in figures 6-7, when assembling, the first barrier element 11 is positioned with the first surface 15 resting on the roof 4 and facing the openings 7, while the connecting holes 18 provided at its borders are aligned with corresponding connecting holes 68 provided on the roof 4.

In turn, the second barrier element 21 is positioned with the second surface 25 facing and spaced apart from the first surface 15, while the portions 26 rest on the corresponding borders of the first barrier element 11; the connecting holes 28 provided at its borders are aligned with the corresponding holes 18 provided at the borders of the first barrier element 11.

When used, the side frame members 50 are leant against above and at the borders of the second barrier element 21 with the holes 58 aligned with corresponding holes 18, 28, 68.

Inside each series of aligned holes 18, 28, 68 and 58 when frame members 50 are used, there are inserted corresponding end portions of connectors 40. In the example illustrated such connectors 40 have a substantially cylindrical body with a central portion 41 which is bigger than the end portions 42 which are for example threaded; for the sake of simplicity only few connectors 40 positioned on two parallel sides are shown in figure 6, while it has to be understood that connectors 40 can be used on whichever side and in the number desired.

In practice, as illustrated in figure 7, one end portion 42 of each connector 40 is inserted and passes through the aligned holes 18, 28, 68 (and 58 when present) with one side of the bigger central portion 42 resting on second barrier element 21 or the corresponding frame member 50 when such members 50 are used.

Then the third shielding element 31 is placed so as the second end portion 42 of each connector 40 enters a corresponding connecting hole 38 of the shield element 31 itself; the shield element 31 thus rests on the second side of the bigger portion 41 and is positioned with its central flat shielding surface 35 facing and spaced apart from the second barrier element 21. Suitable securing means such as self-clinching nuts 43 are used in order to complete the mutual assembly of the various elements 11, 21, 31 (and 50 when used) among them and with the roof 4.

In practice, the three elements 11, 21, 31 are vertically stacked outside the enclosure of the switchgear panel 100 and define (also together with the frame members 50 when used) one or more side venting areas 70 which are located transversely with respect to at least one, preferably both, the plurality of first through openings 12 and the plurality of second through openings 22.

More particularly, in the exemplary embodiment illustrated, once the various elements are assembled, the first barrier element 11 and the second barrier element 21 delimit between them an internal space 80 which is substantially closed at the sides and is open at the corresponding holes 12 and 22; the one or more side venting areas 70 (two of which are marked in figure 7 with inclined lines) are defined between and at the borders of the second barrier element 21 and the third barrier element 31.

In particular, the assembly 10 defines, as a whole, a dedicated environment inside which the resulting by-products of an electric arc struck into the enclosure and related effects are mitigated; the sets of first through openings 12 allow the passage of some arc-generated by-products, such as flames, particulate and hot gases, into the closed interior space 80, while the set of second through openings 22 further reduces the quantity of by-products and related effects which enter the space 90 between the second barrier element 21 and the third shielding element 31. Indeed, by using different venting areas, and particularly of through venting areas of decreasing size towards the direction of movement of the arc-generated by-products from the interior of the enclosure towards the open environment, the assembly 10 behaves like a suppressor and slows down in particular hot gases and flames. Then what passes through the second through holes 22 is shielded by the non-perforated third element 31 and flows (esp. hot gases) towards and passes through the one or more side venting areas 70 substantially transversely (see arrows 71) with reference to the roof 4. The side frame members 50 create a labyrinth which contributes to channel the gases towards the venting areas 70.

In this way, most of by-products of an electric arc are mitigated by the assembly 10 and hot gases (or even flames) are in any case slowed down outside it and allowed to run for a short distance compatible with relevant safety standard requirements and tests; as illustrated in figure 7, even borders 44 of the roof 4 may be used as further reflecting or hindering surfaces. It is evident from the above that the switchgear panel 100 according to the invention offers an improved gas venting system with significant advantages over the known prior art and according to a solution extremely simple and effective. The electric switchgear panel 100 thus conceived may undergo numerous modifications and come in several variants, all falling within the scope of the inventive concept as defined by the appended claims; for the example, the various barrier elements may be differently shaped, or they may be differently positioned with respect to each other and to the associated enclosure, or differently connected; the assembly 10 can be connected to another wall of the enclosure, for instance the back wall, et cetera. The component materials and dimensions of the switchgear may be of any type, according to needs and the state of the art and provided they are compatible with the scope of the invention as defined in the appended claims.

## Claims

1. A switchgear panel (100) comprising an enclosure having a plurality of walls (1, 2, 3, 4, 5, 6) which delimit an internal volume suitable to accommodate electrical or electronic equipment, at least a first wall (4) of said plurality of walls being provided with one or more openings (7), and a gas venting assembly (10) which is operatively associated to said first wall (4) and comprises:
- at least a first barrier element (11) comprising a first surface (15) which is provided with a plurality of first through openings (12) defining each a first venting area (13);
- a second barrier element (21) comprising a second surface (25) provided with a plurality of second through openings (22) defining each a second venting area (23);
wherein said first barrier element (11) ans said second barrier element (21) delimit between them an internal space (80) which is substantially closed at the sides; **characterized in that** said gas venting assembly (10) further comprises a third barrier element (31) comprising a third shielding surface (35), wherein said first barrier element (11), said second barrier element (21) and said third barrier element (31) are operatively coupled to each other and to said first wall (4) so as to define one or more side venting areas (70) which are located transversely with respect to said plurality of first through openings (12) and/or said plurality of second through openings (22), wherein said first barrier element (11), said second barrier element (21) and said third barrier element (31) are mutually assembled outside said enclosure in a vertically stacked configuration by means of connectors (40), said first barrier element (11) being positioned with said first surface (15) facing said first wall (4), said second barrier element (21) being positioned with said second surface (25) spaced apart from and facing said first surface (15), and said third barrier element (31) being positioned with said third shielding surface (35) spaced apart from and facing said second surface (25), wherein said one or more side venting areas (70) are defined between and at the borders of said second barrier element (21) and said third barrier element (31).

2. The switchgear panel (100) according to claim 1, wherein said connectors (40) comprise a cylindrical body having a first end portion (42) which is inserted into aligned first and second connecting holes (18, 28) provided on said first and second barrier elements (11, 21), respectively, a second end portion (42) which is inserted into a corresponding third connecting hole (38) provided on said third barrier element (31), and a central portion (41) which is thicker than said first and second end portions (42) and whose end surfaces are suitable to rest on said second barrier element (21) and said third barrier element (31), respectively.

3. The switchgear panel (100) according to one or more of the preceding claims wherein said gas venting assembly (10) comprises a plurality of frame members (50) which are positioned each at a corresponding side of said second barrier element (21) and outside said internal space (80), said cross members (50) being provided with connecting holes (58) suitable to be aligned each with corresponding aligned first and second connecting holes (18, 28).

4. The switchgear panel (100) according to one or more of the preceding claims wherein the first venting area (13) defined by each first through opening (12) is the same for all first through openings (12), and the venting area (23) defined by each second through opening (22) is the same for all second through openings (22).

5. The switchgear panel (100) according to one or more of the preceding claims wherein the first venting area (13) of each first through opening (12) is different from the second venting area (23) of each second through opening (22).

6. The switchgear panel (100) according to claim 5 wherein the first venting area (13) defined by each first through opening (12) is larger than the second venting area (23) of each second through opening (22).

7. The switchgear panel (100) according to one or more of the preceding claims wherein the second venting area (23) of each second through opening (22) is between 2% and 90% of the first venting area (13) defined by each first through opening (12).

8. The switchgear panel (100) according to claim 7 wherein the second venting area (23) of each second through opening (22) is between 3% and 30% of the first venting area (13) defined by each first through opening (12).

9. The switchgear panel (100) according to one or more of the preceding claims wherein said first through openings (12) are randomly positioned on said first surface (15).

10. The switchgear panel (100) according to one or more of the preceding claims wherein said second through openings (22) are randomly positioned on said second surface (25).

## Patentansprüche

1. Schaltanlage (100), aufweisend einen Schaltschrank mit einer Mehrzahl von Wänden (1, 2, 3, 4, 5, 6), die ein Innenvolumen abgrenzen, das geeignet ist, um elektrisches oder elektronisches Equipment aufzunehmen, wobei zumindest eine erste Wand (4) der Mehrzahl von Wänden eine oder mehrere Öffnungen (7) aufweist, sowie eine Gaskühlanordnung (10), die mit der ersten Wand (4) in Wirkverbindung steht und aufweist:
zumindest ein erstes Abdeckungselement (11), das eine erste Fläche (15) aufweist, die eine Mehrzahl erster Durchgangsöffnungen (12) hat, die jeweils einen ersten Lüftungsbereich (13) definieren;
ein zweites Abdeckungselement (21), das eine zweite Fläche (25) aufweist, die eine Mehrzahl zweiter Durchgangsöffnungen (22) hat, die jeweils einen zweiten Lüftungsbereich (23) definieren,
wobei das erste Abdeckungselement (11) und das zweite Abdeckungselement (21) zwischen sich einen Innenraum (80) abgrenzen, der an den Seiten im Wesentlichen geschlossen ist;
**dadurch gekennzeichnet, dass** die Gaskühlanordnung (10) ferner ein drittes Abdeckungselement (31) aufweist, das eine dritte Abschirmfläche (35) aufweist, wobei das erste Abdeckungselement (11), das zweite Abdeckungselement (21) und das dritte Abdeckungselement (31) miteinander und mit der ersten Wand (4) in Wirkverbindung stehen, um einen oder mehrere Seitenlüftungsbereiche (70) zu definieren, die schräg bezüglich der Mehrzahl erster Durchgangsöffnungen (12) und/oder der Mehrzahl zweiter Durchgangsöffnungen (22) angeordnet sind, wobei das erste Abdeckungselement (11), das zweite Abdeckungselement (21) und das dritte Abdeckungselement (31) gemeinsam außerhalb des Schaltschranks in einem vertikal gestapelten Aufbau mittels Verbindern (40) zusammengefügt sind, wobei das erste Abdeckungselement (11) derart angeordnet ist, dass die erste Fläche (15) der ersten Seitenwand (4) zugewandt ist, wobei das zweite Abdeckungselement (21) derart angeordnet ist, dass die zweite Fläche (25) von der ersten Fläche (15) beabstandet und dieser zugewandt ist, und wobei das dritte Abdeckungselement (31) derart angeordnet ist, dass die dritte Abschirmfläche (35) von der zweiten Fläche (25) beabstandet und dieser zugewandt ist, wobei der eine oder die mehreren Seitenlüftungsbereiche (70) zwischen und an den Rändern des zweiten Abdeckungselements (21) und des dritten Abdeckungselements (31) definiert sind.

2. Schaltanlage (100) nach Anspruch 1, wobei die Verbinder (40) einen zylindrischen Körper aufweisen, der einen ersten Endabschnitt (42) hat, der in ausgerichtete erste und zweite Verbindungsöffnungen (18, 28) eingefügt ist, die jeweils in den ersten und zweiten Abdeckungselementen (11, 21) ausgebildet sind, einen zweiten Endabschnitt (42), der in eine korrespondierende dritte Verbindungsöffnung (38) eingefügt ist, die in dem dritten Abdeckungselement (31) ausgebildet ist, sowie einen Mittelabschnitt (41), der dicker ist als der erste und zweite Endabschnitt (42), und dessen Endflächen geeignet sind, um jeweils auf dem zweiten Abdeckungselement (21) und dem dritten Abdeckungselement (31) aufzuliegen.

3. Schaltanlage (100) nach einem oder mehreren der vorhergehenden Ansprüche, wobei die Gaskühlanordnung (10) eine Mehrzahl von Rahmenelementen (50) aufweist, die jeweils an einer korrespondierenden Seite des zweiten Abdeckungselements (21) und außerhalb des Innenraums (80) angeordnet sind, wobei die Rahmenelemente (50) Verbindungsöffnungen (58) aufweisen, die jeweils mit korrespondierend ausgerichteten ersten und zweiten Verbindungsöffnungen (18, 28) ausgerichtet werden können.

4. Schaltanlage (100) nach einem oder mehreren der vorhergehenden Ansprüche, wobei der erste Lüftungsbereich (13), der durch jede erste Durchgangsöffnung (12) definiert ist, bei allen ersten Durchgangsöffnungen (12) gleich ist, und der zweite Lüftungsbereich (23), der durch jede zweite Durchgangsöffnung (22) definiert ist, bei allen zweiten Durchgangsöffnungen gleich ist.

5. Schaltanlage (100) nach einem oder mehreren der vorhergehenden Ansprüche, wobei der erste Lüftungsbereich (13) einer jeden ersten Durchgangsöffnung (12) sich vom zweiten Lüftungsbereich (23) einer jeden zweiten Durchgangsöffnung (22) unterscheidet.

6. Schaltanlage (100) nach Anspruch 5, wobei der von jeder ersten Durchgangsöffnung (12) definierte erste Lüftungsbereich (13) größer ist als der zweite Lüftungsbereich (23) einer jeden zweiten Durchgangsöffnung (22).

7. Schaltanlage (100) nach einem oder mehreren der vorhergehenden Ansprüche, wobei der zweite Lüftungsbereich (23) einer jeden zweiten Durchgangsöffnung (22) zwischen 2% und 90% des von jeder ersten Durchgangsöffnung (12) definierten ersten Lüftungsbereichs (13) liegt.

8. Schaltanlage (100) nach Anspruch 7, wobei der zweite Lüftungsbereich (23) einer jeden zweiten Durchgangsöffnung (22) zwischen 3% und 30% des von jeder ersten Durchgangsöffnung (12) definierten ersten Lüftungsbereichs (13) liegt.

9. Schaltanlage (100) nach einem oder mehreren der vorhergehenden Ansprüche, wobei die ersten Durchgangsöffnungen (12) zufällig auf der ersten Fläche (15) angeordnet sind.

10. Schaltanlage (100) nach einem oder mehreren der vorhergehenden Ansprüche, wobei die zweiten Durchgangsöffnungen (22) zufällig auf der ersten Fläche (25) angeordnet sind

## Revendications

1. Panneau d'appareillage de commutation (100) comprenant une enceinte ayant une pluralité de parois (1, 2, 3, 4, 5, 6) qui délimitent un volume interne apte à recevoir un équipement électrique ou électronique, au moins une première paroi (4) de ladite pluralité de parois étant pourvue d'une ou de plusieurs ouvertures (7) et un ensemble d'évacuation de gaz (10) qui est associé de manière fonctionnelle à ladite première paroi (4) et qui comprend :
- au moins un premier élément barrière (11) comprenant une première surface (15) qui est pourvue d'une pluralité de premières ouvertures traversantes (12) définissant chacune une première zone d'évacuation (13) ;
- un deuxième élément barrière (21) comprenant une deuxième surface (25) pourvue d'une pluralité de deuxièmes ouvertures traversantes (22) définissant chacune une deuxième zone d'évacuation (23) ;
dans lequel ledit premier élément barrière (11) et ledit deuxième élément barrière (21) délimitent entre eux un espace interne (80) qui est sensiblement fermé sur les côtés ;
**caractérisé en ce que** ledit système d'évacuation de gaz (10) comprend en outre un troisième élément barrière (31) comprenant une troisième surface de blindage (35), dans lequel ledit premier élément barrière (11), ledit deuxième élément barrière (21) et ledit troisième élément barrière (31) sont couplés de manière fonctionnelle les uns aux autres et à ladite première paroi (4) de manière à définir une ou plusieurs zones d'évacuation latérales (70) qui sont situées transversalement par rapport à ladite pluralité de premières ouvertures traversantes (12) et/ou à ladite pluralité de deuxièmes ouvertures traversantes (22), dans lequel ledit premier élément barrière (11), ledit deuxième élément barrière (21) et ledit troisième élément barrière (31) sont assemblés mutuellement à l'extérieur de ladite enceinte dans une configuration empilée verticalement au moyen de connecteurs (40), ledit premier élément barrière (11) étant positionné avec ladite première surface (15) opposée à ladite première paroi (4), ledit deuxième élément barrière (21) étant positionné avec ladite deuxième surface (25) espacée de et opposée à ladite première surface (15), et ledit troisième élément barrière (31) étant positionné avec ladite troisième surface de blindage (35) espacée de et opposée à ladite deuxième surface (25), dans lequel ladite ou lesdites plusieurs zones d'évacuation latérales (70) sont définies entre et aux bords dudit deuxième élément barrière (21) et dudit troisième élément barrière (31).

2. Panneau d'appareillage de commutation (100) selon la revendication 1, dans lequel lesdits connecteurs (40) comprennent un corps cylindrique ayant une première partie d'extrémité (42) qui est insérée dans un des premier et deuxième trous de connexion alignés (18, 28) prévus sur lesdits premier et deuxième éléments barrière (11, 21), respectivement, une deuxième partie d'extrémité (42) qui est insérée dans un troisième trou de connexion correspondant (38) prévu sur ledit troisième élément barrière (31), et une partie centrale (41) qui est plus épaisse que lesdites première et deuxième parties d'extrémité (42) et dont les surfaces d'extrémité sont aptes à reposer sur ledit deuxième élément barrière (21) et ledit troisième élément barrière (31), respectivement.

3. Panneau d'appareillage de commutation (100) selon une ou plusieurs des revendications précédentes dans lequel ledit système d'évacuation de gaz (10) comprend une pluralité d'éléments de cadre (50) qui sont positionnés chacun à un côté correspondant dudit deuxième élément barrière (21) et à l'extérieur dudit espace interne (80), lesdits éléments transversaux (50) étant pourvus de trous de connexion (58) aptes à être alignés chacun avec les premier et deuxième trous de connexion alignés correspondants (18, 28).

4. Panneau d'appareillage de commutation (100) selon une ou plusieurs des revendications précédentes, dans lequel la première zone d'évacuation (13) définie par chaque première ouverture traversante (12) est la même pour toutes les premières ouvertures traversantes (12), et la zone d'évacuation (23) définie par chaque deuxième ouverture traversante (22) est la même pour toutes les deuxièmes ouvertures traversantes (22).

5. Panneau d'appareillage de commutation (100) selon une ou plusieurs des revendications précédentes, dans lequel la première zone d'évacuation (13) de chaque première ouverture traversante (12) est différente de la deuxième zone d'évacuation (23) de chaque deuxième ouverture traversante (22).

6. Panneau d'appareillage de commutation (100) selon la revendication 5, dans lequel la première zone d'évacuation (13) définie par chaque première ouverture traversante (12) est plus grande que la deuxième zone d'évacuation (23) de chaque deuxième ouverture traversante (22).

7. Panneau d'appareillage de commutation (100) selon une ou plusieurs des revendications précédentes, dans lequel la deuxième zone d'évacuation (23) de chaque deuxième ouverture traversante (22) est comprise entre 2% et 90% de la première zone d'évacuation (13) définie par chaque première ouverture traversante (12).

8. Panneau d'appareillage de commutation (100) selon la revendication 7, dans lequel la deuxième zone d'évacuation (23) de chaque deuxième ouverture traversante (22) est comprise entre 3% et 30% de la première zone d'évacuation (13) définie par chaque première ouverture traversante (12).

9. Panneau d'appareillage de commutation (100) selon une ou plusieurs des revendications précédentes, dans lequel lesdites premières ouvertures traversantes (12) sont positionnées de manière aléatoire sur ladite première surface (15).

10. Panneau d'appareillage de commutation (100) selon une ou plusieurs des revendications précédentes, dans lequel lesdites deuxièmes ouvertures traversantes (22) sont positionnées de manière aléatoire sur ladite deuxième surface (25).
